# EUROPEAN PATENT SPECIFICATION

(11) **EP 3 315 386 B1**
(45) Date of publication and mention of the grant of the patent: **19.08.2020**
(21) Application number: 16814300.6
(22) Date of filing: 20.06.2016
(51) Int. Cl.: B62D 5/065, B62D 1/22, B62D 5/09

(54) **STEERING DEVICE FOR CONSTRUCTION/TRANSPORT/FARM MACHINE**
LENKVORRICHTUNG FÜR BAU-/TRANSPORT-/LANDMASCHINEN
DISPOSITIF DE DIRECTION POUR UNE MACHINE DE CONSTRUCTION/DE TRANSPORT/D'AGRICULTURE

(30) Priority: 23.06.2015 JP 2015125456
(43) Date of publication of application: 02.05.2018
(73) Proprietor: Eaton Intelligent Power Limited, Dublin 4 (IE)
(72) Inventor: IRIE, Sadao, Takatsuki-shi Osaka 569-0012 (JP)
(74) Representative: BRP Renaud & Partner mbB Rechtsanwälte Patentanwälte Steuerberater
(86) International application number: PCT/JP2016/068225
(87) International publication number: WO 2016/208530

(56) References cited:
- EP-A1- 2 113 445
- EP-A1- 2 774 827
- WO-A1-2013/145334
- JP-A- 2005 535 487

## Description

### Technical Field

The present invention relates to a steering system and, more specifically, to a steering system for construction and transportation machines such as front loaders and for agricultural machines such as tractors.

### Background Art

Construction, transportation, and agricultural machines such as front loaders have a steering wheel for performing steering operations when traveling at high speeds over public roads and at work sites. Also, a lever such as a joystick is used to perform simple and efficient steering operations that are repetitive and to travel short distances at work sites.

In a front loader that can be steered by operating either a steering wheel or a lever, the machine may be operated unintentionally if the driver accidentally touches the lever while using the steering wheel.

In order to avoid this problem, a control system has been proposed that prioritizes steering wheel operation when the steering wheel and the lever are operated at the same time (see, for example, Patent Document 1). When the steering wheel is operated, a sequence valve is activated by hydraulic fluid flowing through the control valve for operating the steering wheel, and the supply of hydraulic fluid from the control valve for operating the lever operation to the steering cylinder is stopped.

### Prior Art Documents

EP 2 774 827 A1 relates to a steering system for construction, transportation and agricultural machines according to the preamble of the single claim

### Patent Documents

Patent Document 1: Unexamined Patent Publication 2005-535487 (JP, A)

### Summary of Invention

### Technical Problem

In the control system disclosed in Patent Document 1, two electromagnetic control valves and a sequence valve are provided as means for prioritizing steering wheel operations, and these are separate from the control valve for operating the steering wheel and the control valve for operating the lever. Therefore, in this configuration, the mechanism for prioritizing steering wheel operations is complicated.

Also, in the control system disclosed in Patent Document 1, the sequence valve and electromagnetic control valves are activated by hydraulic fluid flowing through the valve for operating the steering wheel, and the pressure at both ends of the control valve for operating the lever is equalized. This stops the supply of hydraulic fluid from the control valve for operating the lever to the steering cylinder. Therefore, in this configuration, operation of the sequence valve may become unstable depending on the amount of hydraulic fluid flowing through the steering wheel control valve, and steering wheel operations are not always and reliably given priority.

It is an object of the present invention to solve the problems associated with steering systems for construction, transportation, and agricultural machines of the prior art by providing a steering system for construction, transportation, and agricultural machines that can be steered using a steering wheel and lever (or automatic steering) in which a mechanism for prioritizing steering wheel operation can be realized that has a simple configuration and that always operates stably.

### Solution to Problem

This purpose is achieved by the present invention which relates to a steering system for construction, transportation, and agricultural machines as defined in the single claim

The steering system comprises a mode switching valve for switching steering wheel operation or lever/automatic steering operation to the pilot fluid passage for switching the steering wheel prioritizing valve, the mode switching valve being operated by an external signal so that the pilot fluid passage is blocked and the electromagnetic control valve for the lever or automatic steering and the steering cylinders are no longer communicating.

### Advantageous Effects of Invention

The present invention is able to provide a steering system for construction, transportation, and agricultural machines that can be steered using a steering wheel and lever (or automatic steering) in which a mechanism for prioritizing steering wheel operation can be realized that has a simple configuration and that always operates stably.

Also, the steering system for construction, transportation, and agricultural machines of the present invention further comprises a mode switching valve for switching steering wheel operation or lever/automatic steering operation to the pilot fluid passage for switching the steering wheel prioritizing valve, the mode switching valve being operated by an external signal so that the pilot fluid passage is blocked and the electromagnetic control valve for the lever or automatic steering and the steering cylinders are no longer communicating, thereby easily avoiding danger even when, for example, the electromagnetic control valve for the lever or automatic steering accidentally slips into neutral while the steering wheel control valve is not being operated.

### Brief Description of Drawings

[Fig. 1]

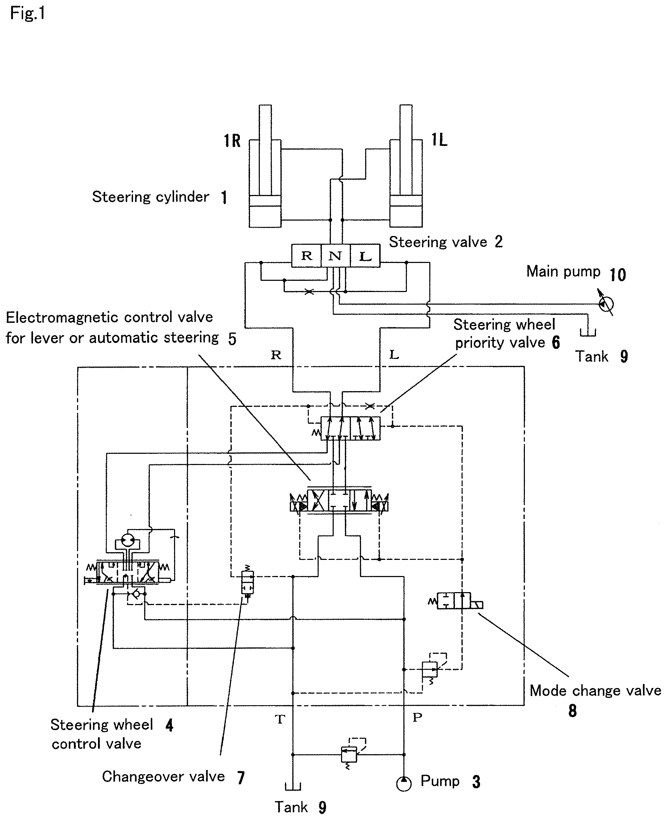

   Fig. 1 is a diagram used to explain the system configuration (steering wheel operation prioritization in a closed center system) of the steering system for construction, transportation, and agricultural machines in a first example of the present invention.
[Fig. 2]

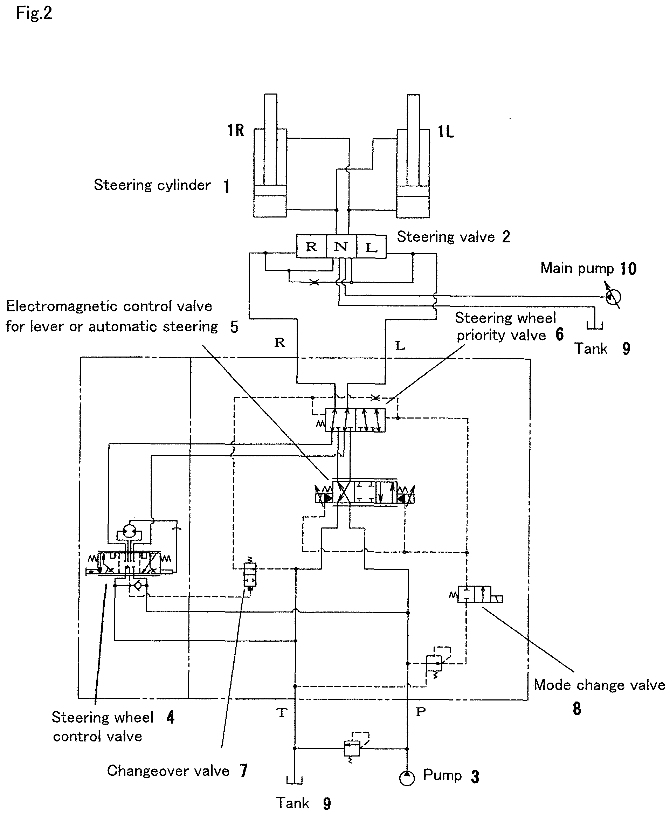

   Fig. 2 is a diagram used to explain the system configuration (mode switching operation in a closed center system) of the steering system for construction, transportation, and agricultural machines in the first example of the present invention.
[Fig. 3]

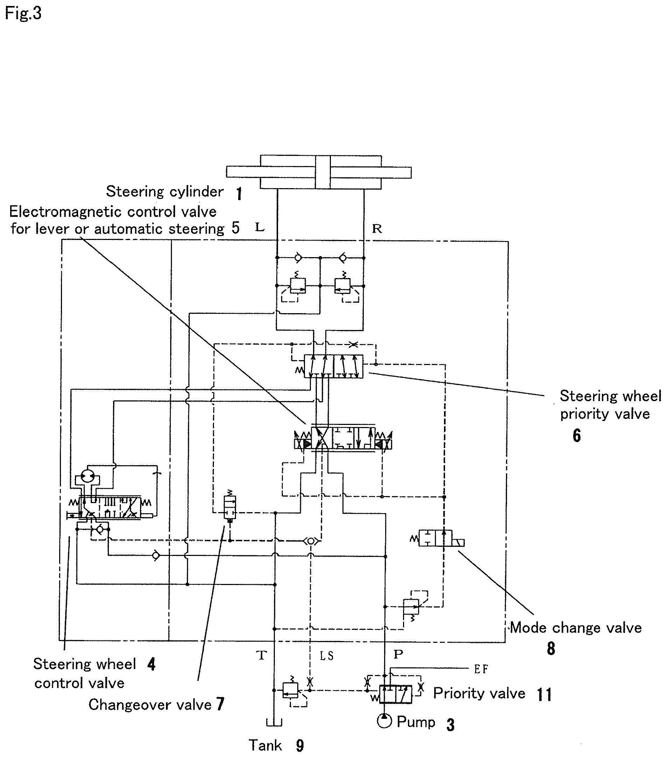

   Fig. 3 is a diagram used to explain the system configuration (steering wheel operation prioritization in a load sensing system) of the steering system for construction, transportation, and agricultural machines in a second example of the present invention.
[Fig. 4]

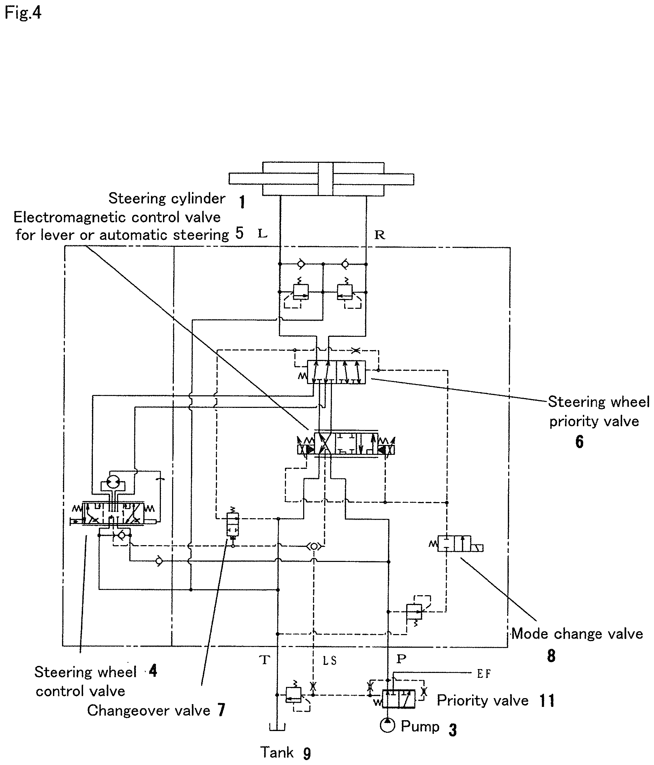

   Fig. 4 is a diagram used to explain the system configuration (mode switching operation in a load sensing system) of the steering system for construction, transportation, and agricultural machines in a second example of the present invention.
[Fig. 5]

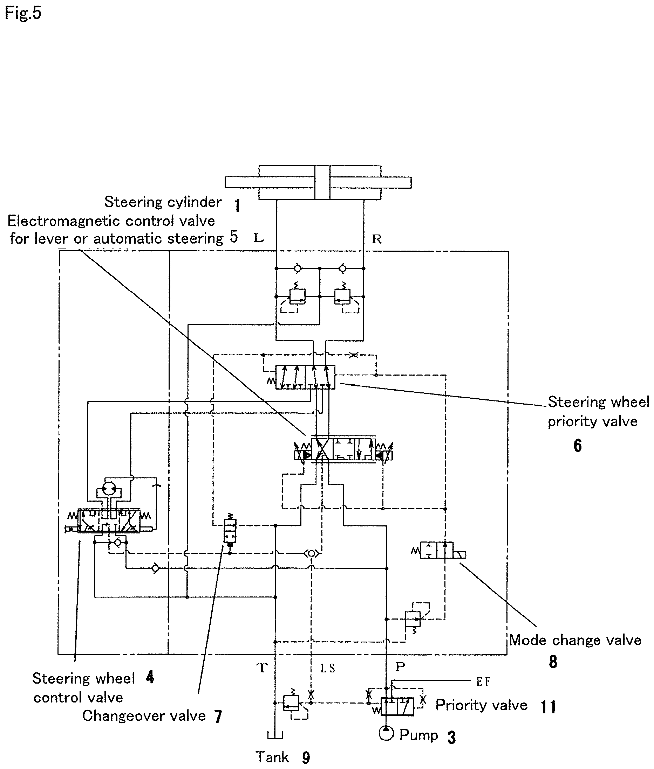

   Fig. 5 is a diagram used to explain the system configuration (load reaction mechanism operation in a load sensing system) of the steering system for construction, transportation, and agricultural machines in the second example of the present invention.
[Fig. 6]

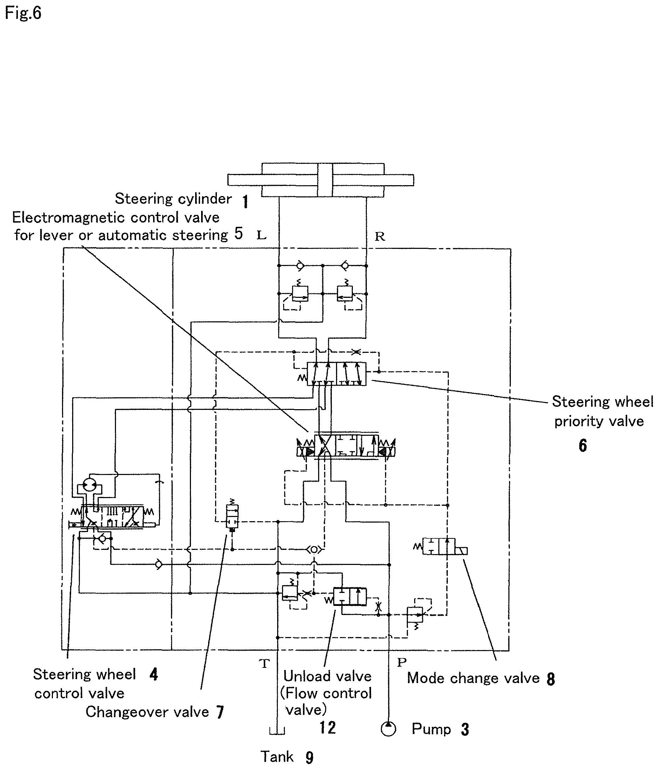

   Fig. 6 is a diagram used to explain the system configuration (steering wheel operation prioritization in an open center system) of the steering system for construction, transportation, and agricultural machines in a third example of the present invention.
[Fig. 7]

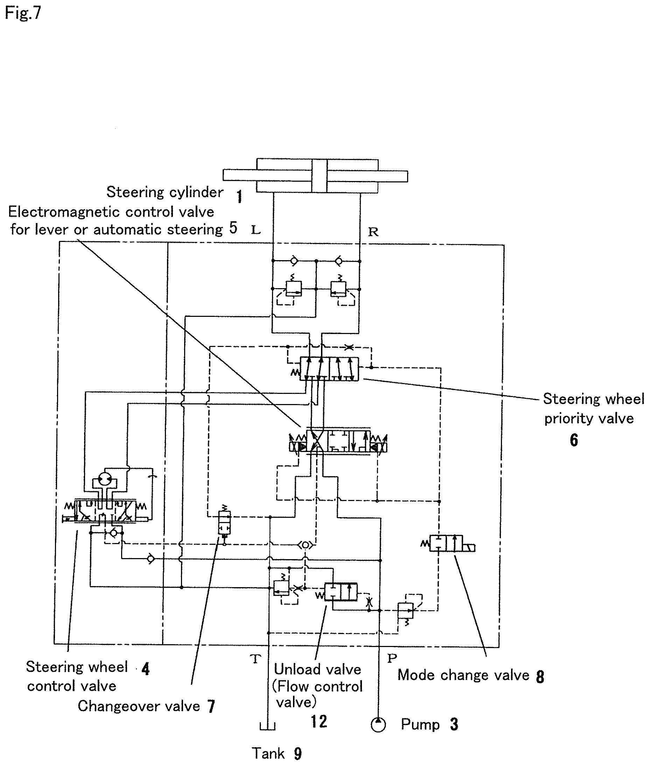

   Fig. 7 is a diagram used to explain the system configuration (mode switching operation in an open center system) of the steering system for construction, transportation, and agricultural machines in the third example of the present invention.
[Fig. 8]

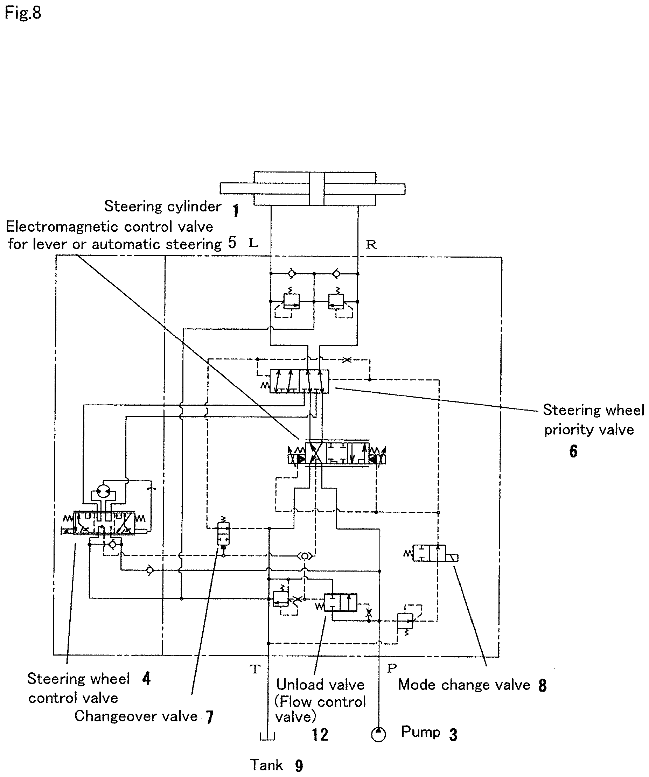

   Fig. 8 is a diagram used to explain the system configuration (load reaction mechanism operation in an open center system) of the steering system for construction, transportation, and agricultural machines in the third example of the present invention.

### Description of Embodiments

The following is an explanation of embodiments of the steering system for construction, transportation, and agricultural machines in the present invention with reference to the drawings.

### [Steering Wheel Operation Prioritization in a Closed Center System]

Fig. 1 shows the system configuration (steering wheel operation prioritization in a closed center system) of the steering system for construction, transportation, and agricultural machines in a first example of the present invention.

This steering system is composed of steering cylinders 1, a steering valve 2, a pump 3, a steering wheel control valve 4 operated by the turning steering wheel, an electromagnetic control valve 5 for the lever or automatic steering operated by a tilting joystick or operated by an automatic steering mechanism, a steering wheel prioritizing valve 6, a switching valve 7, a mode switching valve 8, a tank 9, and a main pump 10. The steering wheel, joystick, or automatic steering mechanism are operated in order to steer the vehicle. When these devices are operated, the steering cylinders 1 are extended and retracted, and the front frame and tires of the construction, transportation, or agricultural machine are turned.

Here, an Orbitrol (registered trademark) valve can be used as the steering wheel control valve 4.

The steering valve 2 supplies hydraulic fluid from the main pump 10 to the steering cylinder 1 based on the pilot hydraulic pressure from the steering wheel control valve 4 or the electromagnetic control valve for the lever or automatic steering 5.

More specifically, the steering valve 2 is switched to the left turning stage L when hydraulic fluid is supplied to the left pilot port, and is switched to the right turning stage R when hydraulic fluid is supplied to the right pilot port. When the steering valve is switched to the left turning stage L, the hydraulic fluid from the main pump 10 is supplied to the bottom-side fluid chamber of the left steering cylinder 1L and the rod-side fluid chamber of the right steering cylinder 1R, and the hydraulic fluid in the bottom-side fluid chamber of the right steering cylinder 1R and the rod-side fluid chamber of the left steering cylinder 1L is returned to the tank 9 via a fluid draining passage. Conversely, when the steering valve is switched to the right turning stage R, hydraulic fluid is supplied from the main pump 10 to the bottom-side fluid chamber of right steering cylinder 1R and the rod-side fluid chamber of the left steering cylinder 1L, and the hydraulic fluid in the bottom-side fluid chamber of the left steering cylinder 1L and the rod-side fluid chamber of the right steering cylinder 1R is returned to the tank 9 via a fluid draining passage. When hydraulic fluid is not being supplied to the left and right pilot ports, the steering wheel valve is switched to the neutral stage N, and the fluid draining passage between the left and right steering cylinders 1R, 1L and the tank 9 is blocked.

Also, both pilot ports of the steering valve 2 communicate via a throttle. Therefore, when hydraulic fluid is being supplied to one of the pilot ports, hydraulic fluid in the fluid passage of the other pilot port is returned to the tank 9 via the steering wheel control valve 4 or the electromagnetic control valve for the lever or automatic steering 5 and the fluid draining passage.

The steering wheel control valve 4 discharges hydraulic fluid in an amount proportional to the amount the steering wheel has been turned from the left or right port in accordance with the direction of rotation of the steering wheel.

Fluid passages from the steering wheel control valve 4 are connected, respectively, to the left and right pilot ports of the steering valve 2 via the steering wheel prioritizing valve 6.

The ports on the input side of the steering wheel control valve 4 are connected to the pump 3 and the tank 9 via fluid passages.

The port on the input side of the electromagnetic control valve for the lever or automatic steering 5 is connected to the pump 3 and the tank 9 via fluid passages. The electromagnetic control valve for the lever or automatic steering 5 discharges the hydraulic fluid inputted from the port to the port on the output side based on the operation of the joystick. The steering wheel prioritizing valve 6 is provided on the output side port of the electromagnetic control valve for the lever or automatic steering 5.

Then, the hydraulic fluid from the electromagnetic control valve for the lever or automatic steering 5 is provided to each pilot port of the steering valve 2 via the steering wheel prioritizing valve 6.

The switching valve 7 for switching the steering wheel prioritizing valve 6 has a two-port, two-position configuration for closing the fluid draining passage of the steering wheel prioritizing valve 6 using the load pressure generated when the steering wheel control valve 4 was operated.

Then, when the steering wheel is operated, hydraulic fluid is inputted to the steering wheel control valve 4. At this time, the switching valve 7 for switching the steering wheel prioritizing valve 6 senses the load pressure (higher pressure) generated when the steering wheel control valve 4 was operated and closes the fluid draining passage of the steering wheel prioritizing valve 6 using the pressure. Therefore, when the steering wheel is operated, hydraulic fluid from the electromagnetic control valve for the lever or automatic steering 5 is blocked by the steering wheel prioritizing valve 6 and operation using the steering wheel is prioritized even if the joystick is inadvertently operated by a driver who touches the joystick accidentally, and steering wheel operation is prioritized.

In this steering system, a mechanism for prioritizing the steering wheel operation can be realized that has a simple configuration and that always operates stably by using a switching valve 7 for switching the steering wheel prioritizing valve 6 in which the switching valve 7 has a two-port, two-position configuration that blocks the fluid draining passage of the steering wheel prioritizing valve 6 using the load pressure generated when the steering wheel control valve 4 is operated.

### [Mode Switching Operation in a Closed Center System]

Fig. 2 shows the system configuration (mode switching operation in a closed center system) of the steering system for construction, transportation, and agricultural machines in the first example of the present invention.

In this steering system, a mode switching valve 8 is provided for switching steering wheel operation or lever or automatic steering operation to the pilot fluid passage for switching the steering wheel prioritizing valve 6. The mode switching valve 8 is operated by an external signal so that the pilot fluid passage is blocked and the electromagnetic control valve for the lever or automatic steering 5 and the steering cylinders 1 are no longer communicating, thereby easily avoiding danger even when, for example, the electromagnetic control valve for the lever or automatic steering 5 accidentally slips into neutral while the steering wheel control valve 4 is not being operated.

### [Steering Wheel Operation Prioritization in a Load Sensing System]

Fig. 3 shows the system configuration (steering wheel operation prioritization in a load sensing system) of the steering system for construction, transportation, and agricultural machines in a second example of the present invention.

This steering system is composed of steering cylinders 1, a pump 3, a steering wheel control valve 4 operated by the turning steering wheel, an electromagnetic control valve 5 for the lever or automatic steering operated by a tilting joystick or operated by an automatic steering mechanism, a steering wheel prioritizing valve 6, a switching valve 7, a mode switching valve 8, a tank 9, and a prioritizing valve 11. The steering wheel, joystick, or automatic steering mechanism are operated in order to steer the vehicle. When these devices are operated, the steering cylinders 1 are extended and retracted, and the front frame and tires of the construction, transportation, or agricultural machine are turned.

In this steering system, a steering valve 2 is not provided because hydraulic fluid is supplied directly from the pump 3 to the steering cylinders 1 via steering wheel control valve 4 or the electromagnetic control valve for the lever or automatic steering 5.

The switching valve 7 for switching the steering wheel prioritizing valve 6 has a two-port, two-position configuration for closing the fluid draining passage of the steering wheel prioritizing valve 6 using the load pressure generated when the steering wheel control valve 4 is operated.

Then, when the steering wheel is operated, hydraulic fluid is inputted to the steering wheel control valve 4. At this time, the switching valve 7 for switching the steering wheel prioritizing valve 6 senses the load pressure (higher pressure) generated when the steering wheel control valve 4 was operated and closes the fluid draining passage of the steering wheel prioritizing valve 6 using the pressure. Therefore, when the steering wheel is operated, hydraulic fluid from the electromagnetic control valve for the lever or automatic steering 5 is blocked by the steering wheel prioritizing valve 6 and operation using the steering wheel is prioritized even if the joystick is inadvertently operated by a driver who touches the joystick accidentally, and steering wheel operation is prioritized.

In this steering system, a mechanism for prioritizing the steering wheel operation can be realized that has a simple configuration and that always operates stably by using a switching valve 7 for switching the steering wheel prioritizing valve 6 in which the switching valve 7 has a two-port, two-position configuration that blocks the fluid draining passage of the steering wheel prioritizing valve 6 using the load pressure generated when the steering wheel control valve 4 is operated.

### [Mode Switching Operation in a Load Sensing System]

Fig. 4 shows the system configuration (mode switching operation in a load sensing system) of the steering system for construction, transportation, and agricultural machines in the second example of the present invention.

In this steering system, a mode switching valve 8 is provided for switching steering wheel operation or lever or automatic steering operation to the pilot fluid passage for switching the steering wheel prioritizing valve 6. The mode switching valve 8 is operated by an external signal so that the pilot fluid passage is blocked and the electromagnetic control valve for the lever or automatic steering 5 and the steering cylinders 1 are no longer communicating, thereby easily avoiding danger even when, for example, the electromagnetic control valve for the lever or automatic steering 5 accidentally slips into neutral while the steering wheel control valve 4 is not being operated.

### [Load Reaction Mechanism Operation in a Load Sensing System]

Fig. 5 shows the system configuration (load reaction mechanism operation in a load sensing system) of the steering system for construction, transportation, and agricultural machines in the second example of the present invention.

Also, in this steering system, the steering wheel prioritizing valve 6 can use a selector valve having a stage for establishing communication between the steering cylinders 1 and the steering wheel control valve 4 and a stage for establishing communication between the steering cylinders 1 and the electromagnetic control valve for the lever or automatic steering 5. This prevents danger such as the steering wheel arbitrarily turning in the opposite direction while the electromagnetic control valve for the lever or automatic steering 5 is operating when a load reaction mechanism has been adopted for the steering wheel control valve 4 which transmits load reaction force from the road surface to the steering wheel via the steering cylinders 1.

### [Steering Wheel Operation Prioritization in an Open Center System]

Fig. 6 shows the system configuration (steering wheel operation prioritization in an open center system) of the steering system for construction, transportation, and agricultural machines in a third example of the present invention.

This steering system is composed of steering cylinders 1, a pump 3, a steering wheel control valve 4 operated by the turning steering wheel, an electromagnetic control valve 5 for the lever or automatic steering operated by a tilting joystick or operated by an automatic steering mechanism, a steering wheel prioritizing valve 6, a switching valve 7, a mode switching valve 8, a tank 9, and an unloading valve (flow control valve) 12. The steering wheel, joystick, or automatic steering mechanism are operated in order to steer the vehicle. When these devices are operated, the steering cylinders 1 are extended and retracted, and the front frame and tires of the construction, transportation, or agricultural machine are turned.

In this steering system, a steering valve 2 is not provided because hydraulic fluid is supplied directly from the pump 3 to the steering cylinders 1 via steering wheel control valve 4 or the electromagnetic control valve for the lever or automatic steering 5.

The switching valve 7 for switching the steering wheel prioritizing valve 6 has a two-port, two-position configuration for closing the fluid draining passage of the steering wheel prioritizing valve 6 using the load pressure generated when the steering wheel control valve 4 is operated.

Then, when the steering wheel is operated, hydraulic fluid is inputted to the steering wheel control valve 4. At this time, the switching valve 7 for switching the steering wheel prioritizing valve 6 senses the load pressure (higher pressure) generated when the steering wheel control valve 4 was operated and closes the fluid draining passage of the steering wheel prioritizing valve 6 using the pressure. Therefore, when the steering wheel is operated, hydraulic fluid from the electromagnetic control valve for the lever or automatic steering 5 is blocked by the steering wheel prioritizing valve 6 and operation using the steering wheel is prioritized even if the joystick is inadvertently operated by a driver who touches the joystick accidentally, and steering wheel operation is prioritized.

In this steering system, a mechanism for prioritizing the steering wheel operation can be realized that has a simple configuration and that always operates stably by using a switching valve 7 for switching the steering wheel prioritizing valve 6 in which the switching valve 7 has a two-port, two-position configuration that blocks the fluid draining passage of the steering wheel prioritizing valve 6 using the load pressure generated when the steering wheel control valve 4 is operated.

### [Mode Switching Operation in an Open Center System]

Fig. 7 shows the system configuration (mode switching operation in an open center system) of the steering system for construction, transportation, and agricultural machines in the third example of the present invention.

In this steering system, a mode switching valve 8 is provided for switching steering wheel operation or lever or automatic steering operation to the pilot fluid passage for switching the steering wheel prioritizing valve 6. The mode switching valve 8 is operated by an external signal so that the pilot fluid passage is blocked and the electromagnetic control valve for the lever or automatic steering 5 and the steering cylinders 1 are no longer communicating, thereby easily avoiding danger even when, for example, the electromagnetic control valve for the lever or automatic steering 5 accidentally slips into neutral while the steering wheel control valve 4 is not being operated.

### [Load Reaction Mechanism Operation in an Open Center System]

Fig. 8 shows the system configuration (load reaction mechanism operation in an open center system) of the steering system for construction, transportation, and agricultural machines in the third example of the present invention.

Also, in this steering system, the steering wheel prioritizing valve 6 can use a selector valve having a stage for establishing communication between the steering cylinders 1 and the steering wheel control valve 4 and a stage for establishing communication between the steering cylinders 1 and the electromagnetic control valve for the lever or automatic steering 5. This prevents danger such as the steering wheel arbitrarily turning in the opposite direction while the electromagnetic control valve for the lever or automatic steering 5 is operating when a load reaction mechanism has been adopted for the steering wheel control valve 4 which transmits load reaction force from the road surface to the steering wheel via the steering cylinders 1.

The steering system for construction, transportation, and agricultural machines in the present invention was described above with reference to a plurality of embodiments, but the present invention is not limited to the configurations described in these embodiments, and various configurations are covered by the appended claims.

### Industrial Applicability

The present invention provides a steering system for construction, transportation, and agricultural machines that can be steered using a steering wheel and lever (or automatic steering) in which a mechanism for prioritizing steering wheel operation can be realized that has a simple configuration and that always operates stably. As a result, the present invention can be used advantageously as a steering system for construction, transportation, and agricultural machines.

### Reference Signs List

- 1: Steering cylinders
- 2: Steering valve
- 3: Pump
- 4: Steering wheel control valve
- 5: Electromagnetic control valve for the lever or automatic steering
- 6: Steering wheel prioritizing valve
- 7: Switching valve
- 8: Mode switching valve
- 9: Tank
- 10: Main pump
- 11: Prioritizing valve
- 12: Unloading valve (flow control valve)

## Claims

1. A steering system for construction, transportation, and agricultural machines, the steering system comprising steering cylinders (1R, 1L), a pump (3), a steering wheel control valve (4), an electromagnetic control valve (5) for a lever or automatic steering, a steering wheel prioritizing valve (6), and a switching valve (7) for sensing the load pressure generated when the steering wheel control valve is operated and for switching the steering wheel prioritizing valve using the pressure, and the switching valve for switching the steering wheel prioritizing valve having a two-port, two-position configuration in which a fluid draining passage of the steering wheel prioritizing valve is closed using the load pressure generated when the steering wheel control valve is operated; the system further comprising one of a steering valve (2), a prioritizing valve (11) and an unloading valve (12); **characterized by** the system further comprising a mode switching valve (8) for switching steering wheel operation or lever/automatic steering operation to a pilot fluid passage for switching the steering wheel prioritizing valve, the mode switching valve being operated by an external signal so that the pilot fluid passage is blocked and the electromagnetic control valve for the lever or automatic steering and the steering cylinders are no longer communicating.

## Patentansprüche

1. Lenksystem für Bau-, Transport- und Landwirtschaftsmaschinen, mit Lenkzylindern (1R, 1L), einer Pumpe (3), einem Lenkradsteuerventil (4), einem elektromagnetischen Steuerventil (5) für eine Hebel- oder Automatiklenkung, einem Lenkrad-Priorisierungsventil (6) sowie einem Umschaltventil (7) zum Erfassen des Lastdrucks, der erzeugt wird, wenn das Lenkradsteuerventil betrieben wird, und zum Umschalten des Lenkrad-Priorisierungsventils unter Verwendung des Drucks, wobei das Umschaltventil zum Umschalten des Lenkrad-Priorisierungsventils eine Zwei-Anschluss-Zwei-Positionskonfiguration aufweist, in welcher ein Fluidabflussdurchlass des Lenkrad-Priorisierungsventils unter Verwendung des Lastdrucks geschlossen wird, welcher erzeugt wird, wenn das Lenkradsteuerventil betrieben wird; wobei das System ferner ein Lenkventil (2), ein Priorisierungsventil (11) oder ein Entlastungsventil (12) aufweist; **dadurch gekennzeichnet, dass** das System ferner ein Modusumschaltventil (8) zum Umschalten von Lenkradbetrieb oder Hebel-/ Automatiklenkbetrieb auf einen Steuerfluiddurchlass aufweist, um das Lenkrad-Priorisierungsventil umzuschalten, wobei das Modusumschaltventil mittels eines externen Signals betrieben wird, so dass der Steuerfluiddurchlass blockiert wird und das elektromagnetische Steuerventil für die Hebel- oder Automatiklenkung und die Lenkzylinder nicht länger miteinander kommunizieren.

## Revendications

1. Système de direction pour machines de construction, de transport et agricoles, le système de direction comprenant des cylindres de direction (1R, 1L), une pompe (3), une soupape de commande de roue directrice (4), une soupape de commande électromagnétique (5) pour un levier ou une direction automatique, une soupape de priorité de roue directrice (6), et une soupape de commutation (7) pour détecter la pression de charge générée lorsque la soupape de commande de roue directrice est actionnée, et pour commuter la soupape de priorité de roue directrice en utilisant la pression, et la soupape de commutation pour commuter la soupape de priorité de roue directrice ayant une configuration à deux voies et deux positions, dans laquelle un passage de drainage de fluide de la soupape de priorité de roue directrice est fermé en utilisant la pression de charge générée lorsque la soupape de commande de roue directrice est actionnée ; le système comprenant en outre l'une parmi une soupape de direction (2), une soupape de priorité (11) et une soupape de déchargement (12) ; **caractérisé en ce que** le système comprend en outre une soupape de commutation de mode (8) pour commuter le fonctionnement de roue directrice ou le fonctionnement de levier/direction automatique vers un passage de fluide pilote, pour commuter la soupape de priorité de roue directrice, la soupape de commutation de mode étant actionnée par un signal externe, de sorte que le passage de fluide pilote soit bloqué et que la soupape de commande électromagnétique pour le levier ou la direction automatique et les cylindres de direction ne communiquent plus.
